# EUROPEAN PATENT APPLICATION

(11) **EP 4 707 584 A1**
(43) Date of publication of application: **11.03.2026**
(21) Application number: 24198421.0
(22) Date of filing: 04.09.2024
(51) Int. Cl.: F03D 1/06

(54) **WIND TURBINE ROTOR BLADE AND A METHOD OF MANUFACTURING A WIND TURBINE ROTOR BLADE**

(71) Applicant: Nordex Energy SE & Co. KG, 22419 Hamburg (DE)
(72) Inventor: Fabri, Patrick Roman, 22419 Hamburg (DE); Raschen, Tobias, 22419 Hamburg (DE); Hubald, Mathias, 22419 Hamburg (DE)
(74) Representative: Epping - Hermann - Fischer

(57) **Abstract**

The invention relates to a wind turbine rotor blade (110) comprising a suction side half shell (132) and a pressure side half shell (133), wherein the suction side half shell (132) comprises a first spar cap (141), wherein the pressure side half shell (133) comprises a second spar cap (142), wherein the first spar cap (141) and the second spar cap (142) are connected to each other by an adhesive joint (146), wherein, at least in a section between a root end (126) of the wind turbine rotor blade (110) and a tip end (127) of the wind turbine rotor blade (110), a trailing edge (135) of the wind turbine rotor blade (110) is formed by the first spar cap (141), the second spar cap (142) and the adhesive joint (146). The invention also concerns a method of manufacturing a wind turbine rotor blade.

## Description

The invention concerns a wind turbine rotor blade, and a method of manufacturing a wind turbine rotor blade.

Wind turbines with wind turbine rotor blades are widely known from the state of the art and are used to convert wind energy into electrical energy. Wind turbine rotor blades are usually manufactured in an aerodynamic shell design and comprise several components made of fiber-reinforced laminate, such as an aerodynamic shell. Typically, a wind turbine rotor blade has an elongated design, having a root for attaching the rotor blade to the rotor hub. The wind turbine rotor blade extends from the root to a tip. Typically, two half shells are produced, which are placed on top of each other after their respective manufacture and bonded together to produce the wind turbine rotor blade. Alternatively, the rotor blade can be manufactured as a whole with an integral manufacturing technology. The half shells themselves may be segmented for manufacturing a so-called split blade or segmented blade.

Typically, the elongated wind turbine rotor blade varies its cross-sectional shape widely over its length. The cylindrical root section changes to an air-foil cross-section, in which the cross-sections of the airfoils get smaller and smaller towards the tip. The wind turbine rotor blade has a leading edge and a trailing edge. Especially the shape of the wind turbine rotor blade in the region of the trailing edge varies significantly over the body length.

It is necessary to provide reinforcement means at or within the wind turbine rotor blade for providing the respectively needed stiffness in view of the loads acting on the rotor blade. A high stiffness in the edge region is required, also in the region of the trailing edge, which, as mentioned, varies its shape and thickness significantly. For stiffening the rotor blade, one or more spar caps comprising many separate fiber layers are arranged and respectively integrated in the half shells of the wind turbine rotor blade.

A half shell of the wind turbine rotor blade is commonly manufactured in a mould, wherein layers of laminate and prefabricated parts are arranged in the mould. When a spar cap is integrated into the half shell and arranged within the half shell close to the trailing edge, laminate layers are commonly arranged underneath or on top of the spar cap which extend over an edge of the mould during the manufacturing process. The edge of the mould defines the trailing edge of the rotor blade. In the manufactured rotor blade, these laminate layers form the trailing edge. The part of the layers that extends over the edge of the mould need to be trimmed away. This trimming process must be done manually and can be laborious.

It is an object of the invention to provide an improved wind turbine blade.

This object is achieved by the independent claims. Advantageous embodiments are given in the sub-claims.

A wind turbine rotor blade is disclosed which comprises a pressure side half shell and a suction side half shell. The pressure side half shell comprises a first spar cap. The suction side half shell comprises a second spar cap. The first spar cap and the second spar cap are connected to each other by an adhesive joint. At least in a section between a root end of the wind turbine rotor blade and a tip end of the wind turbine rotor blade, a trailing edge of the wind turbine rotor blade is formed by the first spar cap, the second spar cap and the adhesive joint.

As the trailing edge is formed by the first spar cap, the second spar cap and the adhesive joint, the actual trailing edge contour can be formed only by the first spar cap, the second spar cap and the adhesive joint. In other words, the trailing edge can be free of any shell layer or any laminate covering a chordwise end of the trailing edge.

Accordingly, at the end of the manufacturing process, it may no longer be necessary to remove laminate extending over the trailing edge. The manufacturing process can be simplified as the trimming operation can be omitted completely or can at least be reduced significantly in its extent.

The first spar cap and the second spar cap can be designed to have a shape and a thickness such that the first spar cap and the second spar cap can be joined by the adhesive bond to form a trailing edge which has the desired final trailing edge contour for the rotor blade. The first spar cap and the second spar cap can be provided as prefabricated parts which each comprise a stack of fiber layers or pultruded planks. The thickness and the shape of the first spar cap and of the second spar cap can be set by a width and a length of the fiber layers and by a staggering of the fiber layers of the respective stack.

The first spar cap and the second spar cap can be positioned at the trailing edge over the entire span of the section between the root end and the tip end.

According to an embodiment, an inner surface of the first spar cap and an inner surface of the second spar cap are substantially parallel to each other in an area in which the inner surface of the first spar cap and the inner surface of the second spar cap are covered by the adhesive joint. The inner surfaces being substantially parallel results in an adhesive joint which has a substantially constant thickness and, thus, in a homogenous adhesive connection between the first spar cap and the second spar cap. The thickness of the adhesive joint can be considered as substantially constant if a maximum thickness of the adhesive joint is not larger than 150 % of a minimum thickness of the adhesive joint, preferably not larger than 125 % of the minimum thickness.

According to an embodiment, an inner surface of the first spar cap and an inner surface of the second spar cap enclose an angle which is not larger than 20° in an area in which the inner surface of the first spar cap and the inner surface of the second spar cap are covered by the adhesive joint. Preferably, the angle enclosed between the inner surfaces of the first spar cap and the second spar cap is not larger than 15°, more preferably not larger than 10° or even not larger than 5°.

According to an embodiment, the pressure side half shell and the suction side half shell comprise a shell laminate including a core material, wherein the first spar cap is arranged adjacent to the core material of the pressure side half shell and the second spar cap is arranged adjacent to the core material of the suction side half shell in a chordwise direction.

According to an embodiment, an outer contour of the first spar cap is matched to an outer contour of core material adjacent to the first spar cap. Accordingly, a smooth transition in an outer contour of the rotor blade can be provided between the first spar cap and the shell laminate. No step may be generated between the outer contour of the first spar cap and the outer contour of the shell laminate, resulting in good aerodynamical properties.

According to an embodiment, an outer contour of the second spar cap is matched to an outer contour of core material adjacent to the second spar cap. The matching may also provide a smooth transition in the outer contour of the rotor blade between the second spar cap and the shell laminate.

According to an embodiment, an outer main shell layer covers an outer surface of the shell laminate of the pressure side half shell and/or an outer surface of the shell laminate of the suction side half shell. According to the embodiment, the outer main shell layer partly overlaps with an outer surface of the first spar cap and/or an outer surface of the second spar cap. The outer main shell layer may be arranged in the laminate lay-up as a dry fabric such, that it covers the shell laminate and partly the first spar cap and/or the second spar cap on an outer surface after manufacturing and demolding the rotor blade. The outer main shell layer may not protrude beyond the trailing edge. Accordingly, there is no need to remove parts of the outer main shell layer at the end of the manufacturing process.

According to an embodiment, an outer trailing edge shell layer at least partly covers an outer surface of the first spar cap and/or second spar cap. The outer trailing edge shell layer at least partly overlaps with the outer main shell layer. By including the outer trailing edge shell layer on the outer surfaces of the first and/or second spar cap, a double-edged connection between two laminates can be created, i.e., one laminate on the spar cap and one laminate of the shell laminate.

According to an embodiment, an inner main shell layer covers an inner surface of the shell laminate of the pressure side half shell, wherein the inner main shell layer partly overlaps with an inner surface of the first spar cap.

An inner main shell layer may cover an inner surface of the shell laminate of the suction side half shell, wherein the inner main shell layer partly overlaps with an inner surface of the second spar cap. This contributes to the above-mentioned functions and advantages.

According to an embodiment, an inner trailing edge shell layer at least partly covers an inner surface of the first spar cap, wherein the inner main shell layer at least partly overlaps with the inner trailing edge shell layer, and/or an inner trailing edge shell layer at least partly covers an inner surface of the second spar cap, wherein the inner main shell layer at least partly overlaps with the inner trailing edge shell layer. This contributes to the above-mentioned functions and advantages.

According to an embodiment, the shell laminate and the first spar cap and/or second spar cap are fixed to each other by co-infusion lashing. Co-infusion lashing allows for the simultaneous infusion of different fibers and can ensure a uniform distribution of resin throughout the connection.

According to one embodiment, each of the first spar cap and the second spar cap comprises a stack of fiber layers, wherein each of the stacks comprises at least one of a portion having a trapezoidal cross-sectional shape and a portion having a quadrangular cross-sectional shape. For the first spar cap and for the second spar cap, the trapezoidal cross-section can be beneficial as it allows to tailor the shape of the respective spar cap to the contour of the trailing edge. A spar cap having a trapezoidal cross-section can be arranged at the trailing edge even if the available space at the trailing edge is severely limited.

The cross-sectional shape can be maintained over the entire length of the first spar cap and the second spar cap. Changes can only occur in the longitudinal direction in the form of a changing thickness, while the transverse shape of the first and the second spar cap is kept constant over the entire length. Alternatively, the first spar cap and/or the second spar cap can comprise sections which differ in their cross-sectional shape. For example, at least one section may have a quadrangular cross-sectional shape adapted to form a blunt trailing edge having a predetermined height and at least one section may have a trapezoidal cross-sectional shape adapted to form a sharp trailing edge.

According to one embodiment, the section of the wind turbine rotor blade in which the trailing edge of the wind turbine rotor blade is formed by the first spar cap, the second spar cap and the adhesive joint extends over more than half of the length of the trailing edge of the wind turbine rotor blade. The length of the trailing edge may be its extension in the longitudinal direction, i.e., in a direction from root end to tip end. When the first spar cap, the second spar cap and the adhesive joint extend over more than half of the length of the trailing edge, the trailing edge may be particularly stable in edgewise load cases.

According to an embodiment, the rotor blade comprises a first section having a blunt trailing edge, a second section having a sharp trailing edge and a transition section in which the blunt trailing edge merges into the sharp trailing edge, wherein the trailing edge in the second section and in the transition section is formed at least partly by the first spar cap, the second spar cap and the adhesive joint. The thickness of the spar caps varies over their length. In sections with sufficient space, i.e. the first section up to the transition section, the thickness is larger than in the second section. The maximum number of layers is to be found in the first section up to the transition section, with the spar cap thickness continuously increases from its start position. With decreasing trailing edge thickness the spar cap thickness is also decreasing albeit the fraction of the spar caps in relation to the trailing edge thickness is continuously increasing. Depending on the aerodynamic design, thickness of the spar cap in the first section relates to a range of 5-8% of the local trailing edge thickness per spar cap. Thickness increases to 25-35% of the local trailing edge thickness per spar cap in the transition section while in the second section (outboard section) the spar cap thickness accounts to 35-50% of the local trailing edge thickness per spar cap. The trailing edge of the second section may be formed by the first spar cap, the second spar cap and the adhesive joint over a length of more than 50% of the length of the second section, preferably more than 75 % or even more than 90% of the length of the second section.

According to an embodiment, in the section of the wind turbine rotor blade in which the trailing edge of the wind turbine rotor blade is formed by the first spar cap, the second spar cap and the adhesive joint, the trailing edge of the first spar cap and/or second spar cap has a height decreasing over the length in a direction towards the rotor blade tip. The height of the trailing edge formed by the two spar caps and the adhesive joint may be adapted to the height of the core material adjacent to the two spar caps, which also has a height decreasing towards the tip end.

According to another aspect, a method of manufacturing a wind turbine rotor blade is disclosed. The method comprises the steps of:
- manufacturing a pressure side half shell comprising a first spar cap, wherein, at least in a section between a root end and a tip end of the pressure side half shell, a trailing edge of the pressure side half shell is formed by the first spar cap,
- manufacturing a suction side half shell comprising a second spar cap, wherein, at least in a section between a root end and a tip end of the suction side half shell, a trailing edge of the suction side half shell is formed by the second spar cap,
- connecting the pressure side half shell and the suction side half shell to each other by an adhesive joint such that at least in a section between a root end and a tip end a trailing edge of the wind turbine rotor blade is formed by the first spar cap, the second spar cap and the adhesive joint.

The method enables the above-mentioned functions and advantages. The above-described embodiments with respect to the rotor blade also apply to the method.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a rotor blade,
Figure 3 shows a schematic view of a cross-section of the wind turbine rotor blade,
Figure 4 shows a schematic top view on a wind turbine rotor blade according to an embodiment of the invention,
Figure 5 shows a schematic view of a spar cap,
Figure 6 shows a layups of fiber layers of the spar cap of Figure 5,
Figure 7 shows a cross-section of the spar cap of Figure 6,
Figure 8 shows a schematic view of another spar cap,
Figure 9 shows a layups of fiber layers of the spar cap of Figure 8,
Figure 10 shows a cross-section of the spar cap of Figure 9,
Figures 11 to 13 show a trailing edge of the rotor blade according to different embodiments of the invention,
Figure 14 shows a schematic flow chart of a method for manufacturing a rotor blade according to an embodiment of the invention.

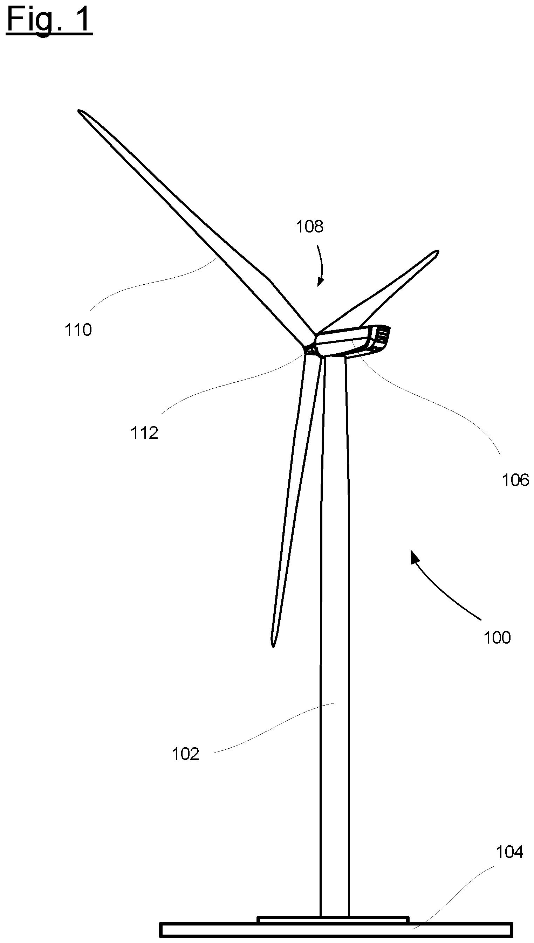

Figure 1 shows a schematic view of a wind turbine 100, which comprises a tower 102. The tower 102 is fixed to the ground by means of a foundation 104. A nacelle 106 is rotatably mounted at one end of the tower 102, opposite to the ground. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

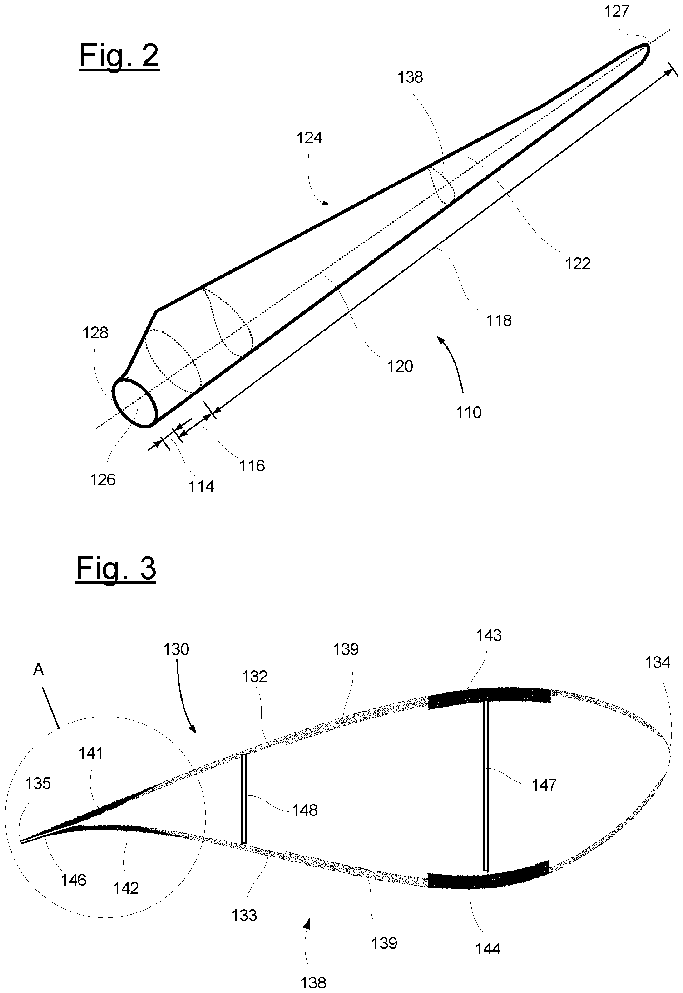

Figure 2 shows an exemplary rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 extending along a longitudinal direction 120 (also main extension direction). The rotor blade 110 is essentially hollow inside.

In the rotor blade root area 114 a rotor blade root end 126 with a flange connection 128 is provided, by means of which the rotor blade 110 can be mechanically connected to a pitch bearing or an extender. The rotor blade 110 can be a segmented rotor blade.

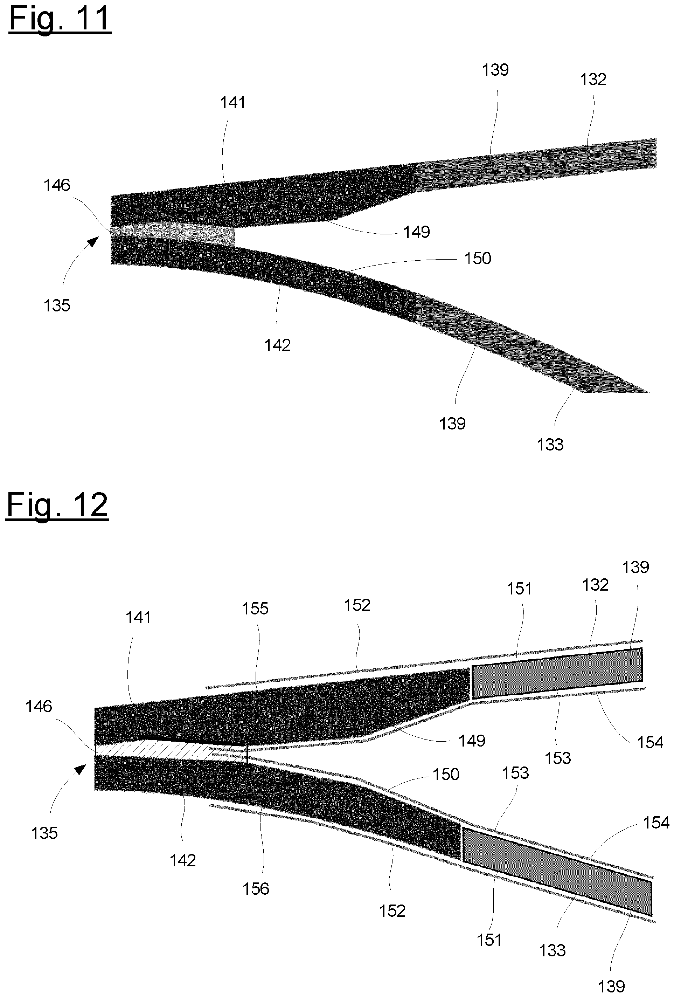

Figure 3 shows a schematic cross-section profile 138 (see Figure 2) of the wind turbine rotor blade 110 running traverse to the longitudinal direction 120. The rotor blade 110 has an aerodynamic shell 130 comprising two half shells, i.e., a suction side half shell 132 and a pressure side half shell 133. The two half shells 132, 133 are firmly connected to each other along the longitudinal axis at opposite connecting surfaces located at the leading edge 134 and trailing edge 135. The circle A marks the connection at the trailing edge 135 which is later discussed in detail with reference to Figures 11 to 13.

Each half shell 132, 133 comprises a shell-structure which comprises a shell laminate 139 and two spar caps 141, 142, 143, 144. The shell laminate 139 includes a core material which is sandwiched between one or more layers of a laminate.

The spar caps 141, 142, 143, 144 are embedded in the shell-structure. The spar caps 143, 144 can also be generally named "main laminate" and carries main loads during operation of the rotor blade 110. Each of the spar caps 141, 142, 143, 144 comprises a stack 145 of fiber layers, which are placed on top of each other during manufacture according to a specific layup pattern. After the layup, the fiber layers are infused with resin and cured afterwards to form the rigid structural spar cap 141, 142, 143, 144. For the fiber layers, raw material is utilized, e.g. fibrous material tapes or semifinished products like fiber reinforced pultruded planks. Each of the spar caps 141, 142, 143, 144 can be manufactured as a prefabricated part or as an integral part of a rotor blade shell 130 during the shell manufacture.

In particular, the suction side half shell 132 comprises a first spar cap 141 which is arranged at a trailing edge 135 of the suction side half shell 132. The pressure side half shell 133 comprises a second spar cap 142 which is arranged at a trailing edge 135 of the pressure side half shell 133. The first spar cap 141 and the second spar cap 142 are fixed to each other by an adhesive joint 146 (see Figure 11). The first spar cap 141, the second spar cap 142 and the adhesive joint 146 form a secondary load-carrying structural member and the trailing edge of the rotor blade.

The suction side half shell 132 comprises a third spar cap 143. The pressure side half shell 133 comprises a fourth spar cap 144. The third spar cap 143 and the fourth spar cap 144 are fixed to each other via a first shear web 147 connecting the third spar cap 143 and the fourth spar cap 144 within the rotor blade. The third spar cap 143, the fourth spar cap 144 and the first shear web 147 form a primary load-carrying structural member.

The rotor blade 110 comprises a second shear web 148 which connects the suction side half shell 132 and the pressure side half shell 133. The second shear web 148 is arranged in chord direction between the primary load-carrying structural member and the first and second spar caps. The second shear web 148 is not fixed to a spar cap. Instead, the second shear web 148 is fixed to the shell laminate 139 of the suction side half shell 132 and to the shell laminate 139 of the pressure side half shell 133. The second shear web 148 can be fixed to each of the shell laminates 139 by an adhesive.

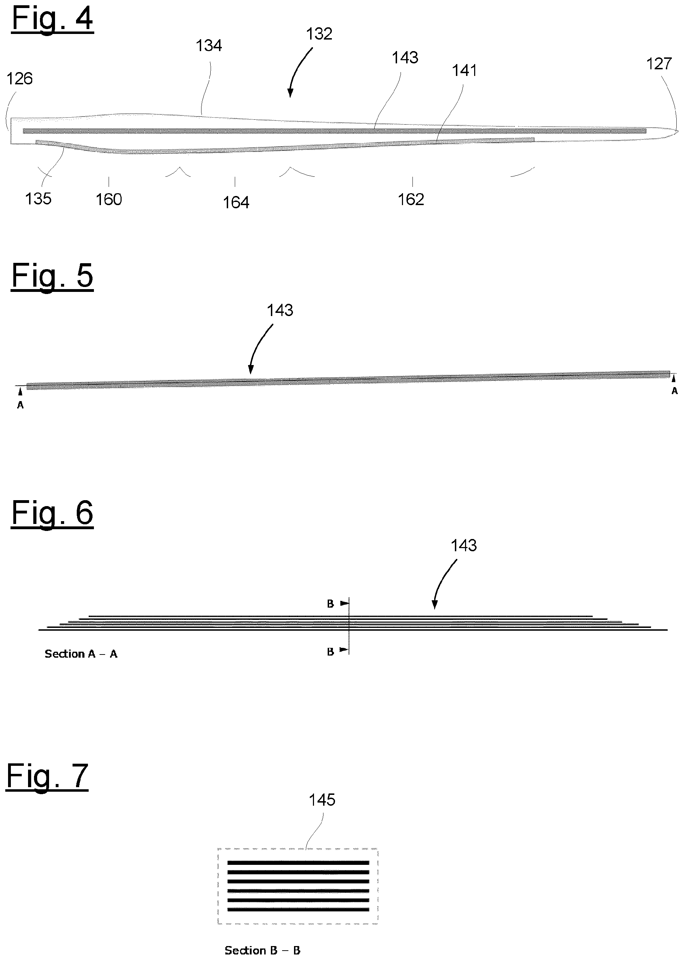

Figure 4 shows a schematic top view of a suction side half shell 132 comprising the first spar cap 141 and the third spar cap 143.

All of the spar caps 141, 142, 143, 144 extend along the longitudinal direction 120 of the wind turbine rotor blade 110, wherein the first spar cap 141 of the suction side half shell 132 and the second spar cap 142 of the pressure side half shell 133 extend closely along the trailing edge 135, at least in a section (or portion) between the root end 126 and a tip end 127.

In a part of the rotor blade 110, the trailing edge 135 is formed by the first spar cap 141, the second spar cap 142 and the adhesive joint 146 between the first spar cap 141 and the second spar cap 142. In this part, the first spar cap 141 and the second spar cap 142 are arranged directly at the trailing edge 135.

The first spar cap 141 and the second spar cap 142 extend over a first section 160, a transition section 164 and a second section 162 of the rotor blade 110. In at least parts of the transition section 164 and in the second section 162 the trailing edge 135 is formed only by the first and the second spar cap 141, 142 and the adhesive joint. In the first section 160 a blunt trailing edge is formed by including fiber reinforced material and/or core material between the first and second spar cap 141, 142. The first spar cap 141 and the second spar cap 142 do not extend to the tip end 127 of the rotor blade. Instead, an outer part of the rotor blade including the tip end 127 is free of the first spar cap 141 and the second spar cap 142.

The third and the fourth spar cap 143, 144 form a primary load path along the wind turbine rotor blade 110.

The first spar cap 141 and the second spar cap 142 serve multiple purposes, namely:
- forming a secondary load path along the trailing edge 135 of the wind turbine rotor blade 110, stabilizing the trailing edge 135 particularly in edgewise load cases,
- creating the majority of edgewise stiffness of the wind turbine rotor blade 110,
- creating the basis for a homogenous trailing edge structural adhesive joint, and
- forming the trailing edge itself.

The first spar cap 141 and the second spar cap 142 define the trailing edge contour of the rotor blade 110. The first spar cap 141 and the second spar cap 142 are manufactured in a shape which matches the exact trailing edge contour of the rotor blade 110. They are manufactured such, that their thickness at the trailing edge side together meets the thickness of the trailing edge of the rotor blade. Thus, the thickness of the spar caps changes over their length. Moreover, the first spar cap 141 and the second spar cap 142 are manufactured such that their thickness matches the thickness of the shell laminate 139 adjacent to the respective spar cap. Accordingly, there is a smooth transition in the outer contour of the rotor blade between the first spar cap 141 and the shell laminate 139 and between the second spar cap 142 and the shell laminate 139.

The number of fiber layers forming the respective spar cap 141, 142 and a staggering of the fiber layers of the spar cap 141, 142 is chosen such that the thickness of the spar caps matches the thickness and the outer contour of the laminate structure 139 adjacent to the spar cap 141, 142 over the length of the rotor blade 110.

As the first and the second spar cap are provided in the shape of the trailing edge contour of the rotor blade and as the thickness of the spar caps matches the thickness of the laminate structure, trimming operations of the finished rotor blade are made obsolete. Instead, at most, minor surface preparations and leveling work is necessary at the end of the manufacturing process.

Figure 5 shows the third spar cap 143 in a schematic top view, wherein a cross-sectional plane A-A is indicated.

The third spar cap 143 comprises a stack 145 of fiber layers, which are placed on top of each other during manufacture according to a specific layup pattern, as schematically shown in a side view along the plane A-A shown in Figure 6. The fiber layers differ in their length, i.e., in their extension in the longitudinal direction. Thus, an overall thickness of the stack 145 varies along the length of the stack 145. Starting from the root end 126 - the thickness of the stack 145 ascends to a maximum thickness and descends towards the tip end 127. In other words, along the length of the stack 145, the fiber layers have an ascending staggering in the root region and a descending staggering in the tip region of the wind turbine rotor blade 110.

Figure 7 shows the cross-section of the stack 145 corresponding to the cross-sectional plane B-B indicated in Figure 6. As can be seen, a quadrangular cross-section of the third spar cap 143 is formed. For the quadrangular cross-section, the fiber layers are stacked flush on top of each other without any transverse staggering. The fiber layers have the same width. The width of a fiber layer is defined as its extension in the transverse direction.

The quadrangular cross-section provides the advantage of a good manufacturability as it is easy to form a stack of fiber layers that are arranged flush in the transverse direction, especially by using pultruded planks.

The fourth spar cap 144 of the pressure side half shell 133 has the same structure as the third spar cap 143 shown in Figures 5, 6 and 7.

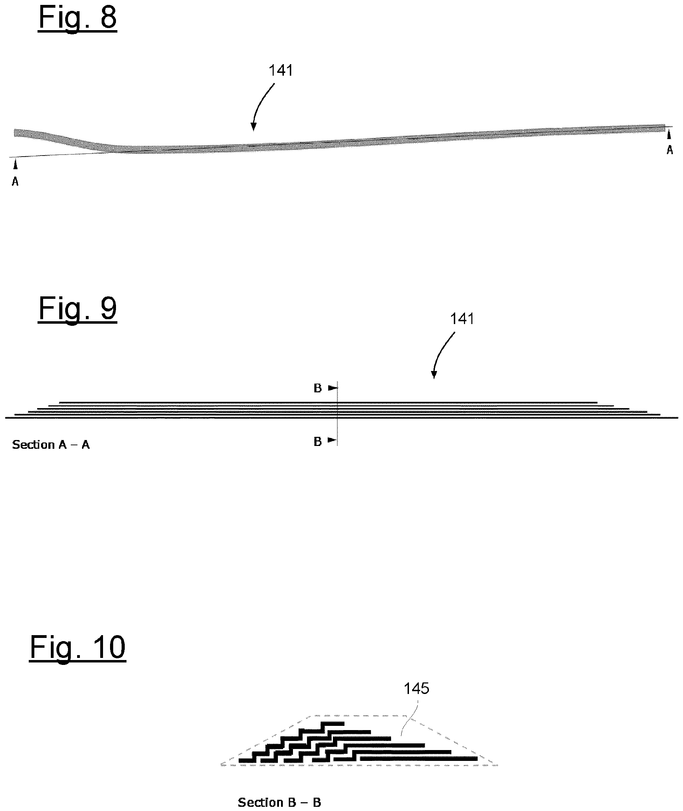

Figure 8 shows the first spar cap 141 in a schematic top view, wherein a cross-sectional plane A-A is indicated.

The first spar cap 141 comprises a stack 145 of fiber layers, which are placed on top of each other during manufacture according to a specific layup pattern, as schematically shown in a side view along the plane A-A shown in Figure 9. The fiber layers differ in their length and in their width.

An overall thickness of the stack 145 varies along the length of the stack 145. Starting from the root end 126 - the thickness of the stack 145 ascends to a maximum thickness. Towards the tip end of the stack 145, the thickness of the stack 145 descends. In other words, along the length of the stack 145, the fiber layers have an ascending staggering in the root region and a descending staggering in the tip region of the wind turbine rotor blade 110.

Figure 10 shows the cross-section of the stack 145 corresponding to the cross-sectional plane B-B indicated in Figure 9.

As can be seen, a trapezoidal cross-section of the first spar cap 141 is formed. The fiber layers of the stack are staggered in the transverse direction to form the trapezoidal cross-section. The staggering of the fiber layers enables to fit the first spar cap 141 into the available construction space along the trailing edge 135. The transverse staggering of the fiber layers enables the construction of the spar cap 141 in a shape that matches the trailing edge contour of the rotor blade 110. Thus, the first spar cap 141 can arranged directly at the trailing edge 135 without requiring significant trimming operations to match the shape of the spar cap 141 to the contour of the trailing edge.

The second spar cap 142 of the pressure side half shell 133 has the same structure as the first spar cap 141 shown in Figures 8, 9 and 10.

In an alternative embodiment, the first and the second spar cap 141, 142 have a quadrangular cross-section.

Figure 11 shows a detailed view of the trailing edge 135 of the rotor blade 110. In Figure 11, an enlarged view of the area A marked in Figure 3 is shown.

The first spar cap 141 of the suction side half shell 132 and the second spar cap 142 of the pressure side half shell 133 are fixed to each other by the adhesive joint 146.

The adhesive joint 146 is provided between an inner surface 149 of the first spar cap 141 facing towards the inside of the rotor blade 110 and an inner surface 150 of the second spar cap 142 facing towards the inside of the rotor blade.

In a chordwise direction, the adhesive joint 146 does not extend over the entire first spar cap 141 and the entire second spar cap 142. Instead, the adhesive joint 146 begins at the trailing edge 135 and extends in chordwise direction over a part of the first spar cap 141 and the second spar cap 142.

In the parts of the first spar cap 141 and the second spar cap 142 which are covered by the adhesive joint 146, the first spar cap 141 and the second spar cap 142 are substantially parallel to each other. The first spar cap 141 and the second spar cap 142 can be considered as substantially parallel to each other, if the inner surface 149 of the first spar cap 141 and the inner surface 150 of the second spar cap 142 enclose an angle which is not larger than 20° in an area in which the inner surface 149 of the first spar cap and the inner surface 150 of the second spar cap are covered by the adhesive joint 146.

As the inner surface 149 of the first spar cap 141 and the inner surface 150 of the second spar cap 142 are substantially parallel in the area in which the adhesive joint 146 is applied, the adhesive joint 146 has a substantially constant thickness. The thickness of the adhesive joint 146 can be considered as substantially constant if it does not deviate from an average thickness by more than 50 %, preferably by not more than 25 %. As the adhesive joint 146 has a substantially constant thickness, the adhesive connection is homogenous, thus ensuring a strong bonding between the first spar cap 141 and the second spar cap 142.

Figure 12 shows an enlarged view of the area A marked in Figure 3 for a rotor blade 110 according to a second embodiment.

In the second embodiment, an outer surface 151 of the shell laminate 139 of the suction side half shell 132 is covered with an outer main shell layer 152. The outer main shell layer 152 also extends partly over an outer surface 155 of the first spar cap 141. Further, an outer surface 151 of the shell laminate 139 of the pressure side half shell 133 is covered by an outer main shell layer 152 which also extends partly over an outer surface 156 of the second spar cap 142.

An inner surface 153 of the shell laminate 139 of the suction side half shell 132 is covered with an inner main shell layer 154. The inner main shell layer 154 partly covers an inner surface 149 of the first spar cap 141. The inner surface 153 of the shell laminate 139 of the pressure side half shell 133 is covered by an inner main shell layer 154. The inner main shell layer 154 also partly covers the inner surface 150 of the second spar cap 142.

The outer main shell layers 152 and the inner main shell layers 154 partly covering the inner and, respectively, outer surfaces 149, 150, 155, 156 of the first spar cap 141 and the second spar cap 142. They fix the first spar cap 141 to the shell laminate 139 of the suction side half shell 132 and the second spar 142 to the shell laminate 139 of the pressure side half shell 133. The first spar cap 141 and the second spar cap 142 are fixed to the outer main shell layer 152 and the inner main shell layer 154 by co-infusion lashing.

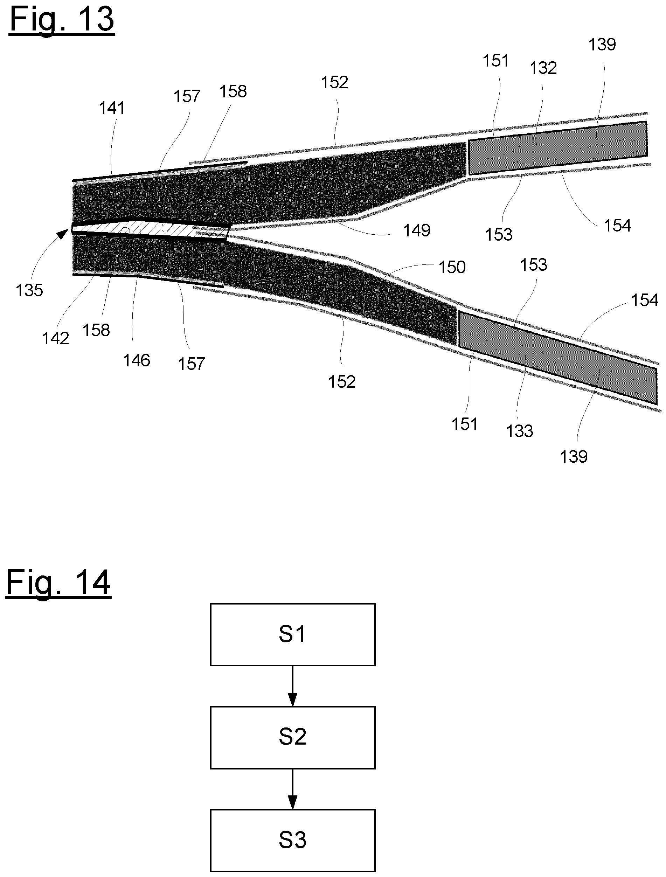

Figure 13 shows an enlarged view of the area A marked in Figure 3 for a rotor blade 110 according to a third embodiment.

According to the third embodiment, an outer trailing edge shell layer 157 is arranged on the outer surface 155 of the first spar cap 141. The outer trailing edge shell layer 157 is overlapped partly by the outer main shell layer 152 covering the suction side half shell 132. An outer trailing edge shell layer 157 is also arranged on the outer surface 156 of the second spar cap 142. The outer trailing edge shell layer 157 on the second spar cap 142 is partly covered by the outer main shell layer 152 covering the pressure side half shell 133.

On the inner surface 149 of the first spar cap 141, an inner trailing edge shell layer 158 is arranged. The inner trailing edge shell layer 158 is partly covered by the inner main shell layer 154 covering the inner surface 150 of the suction side half shell 132. On the inner surface 153 of the second spar cap 142, an inner trailing edge shell layer 158 is arranged. The inner trailing edge shell layer 158 is partly covered by the inner main shell layer 154 covering the inner surface 153 of the pressure side half shell 133.

The outer trailing edge shell layers 157 on the first and second spar caps 141, 142 and the outer main shell layer 152 on the shell laminates 139 of the two half shells 132, 133 are fixed to each other by co-infusion lashing. The inner trailing edge shell layers 158 on the first and second spar cap 141, 142 and the inner main shell layers 154 on the shell laminates 139 of the two half shells 132, 133 are also fixed to each other by co-infusion lashing.

By providing the inner and outer trailing edge shell layers 158, 157 on the inner and outer surfaces of the first and the second spar cap 141, 142, it can be omitted to provide additional laminate layers on the shell laminate 139 which extend over the trailing edge 135 and over a mould edge during manufacture. By doing so, the need for removing laminate layers extending over the trailing edge can be reduced or even avoided completely, thereby simplifying a manufacturing process of the rotor blade 110.

With regard to Figure 14, an exemplary method according to an inventive embodiment for manufacturing the rotor blade 110 of Figures 2 to 13 is disclosed.

In a first step S1, the suction side half shell 132 is manufactured which comprises the first spar cap 141, wherein, at least in a section between a root end and a tip end of the suction side half shell, a trailing edge 135 of the suction side half shell 132 is formed by the first spar cap 141.

In a second step S2, the pressure side half shell 133 is manufactured which comprises the second spar cap 142, wherein, at least in a section between a root end and a tip end of the pressure side half shell, a trailing edge 135 of the pressure side half shell 133 is formed by the second spar cap 142.

In a final step S3, the suction side half shell 132 and the pressure side half shell 133 are connected to each other by an adhesive joint 146 such that a trailing edge 135 of the wind turbine rotor blade 110 is formed by the first spar cap 141, the second spar cap 142 and the adhesive joint 146.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal direction
- 122: pressure side
- 124: suction side
- 126: rotor blade root end
- 127: rotor blade tip end
- 128: flange connection
- 130: shell
- 132: suction side half shell
- 133: pressure side half shell
- 134: leading edge
- 135: trailing edge
- 138: cross-section profile
- 139: shell laminate
- 141: first spar cap
- 142: second spar cap
- 143: third spar cap
- 144: fourth spar cap
- 145: stack of fiber layers
- 146: adhesive joint
- 147: first shear web
- 148: second shear web
- 149: inner surface of the first spar cap
- 150: inner surface of the second spar cap
- 151: outer surface of the shell laminate
- 152: outer main shell layer
- 153: inner surface of the shell laminate
- 154: inner main shell layer
- 155: outer surface of the first spar cap
- 156: outer surface of the second spar cap
- 157: outer trailing edge shell layer
- 158: inner trailing edge shell layer
- 160: first section
- 162: second section
- 164: transition section

## Claims

1. Wind turbine rotor blade (110)
comprising a suction side half shell (132) and a pressure side half shell (133),
wherein the suction side half shell (132) comprises a first spar cap (141),
wherein the pressure side half shell (133) comprises a second spar cap (142),
wherein the first spar cap (141) and the second spar cap (142) are connected to each other by an adhesive joint (146), wherein, at least in a section between a root end (126) of the wind turbine rotor blade (110) and a tip end (127) of the wind turbine rotor blade (110), a trailing edge (135) of the wind turbine rotor blade (110) is formed by the first spar cap (141), the second spar cap (142) and the adhesive joint (146) .

2. Wind turbine rotor blade (110) according to claim 1, wherein an inner surface (149) of the first spar cap (141) and an inner surface (150) of the second spar cap (142) are substantially parallel to each other in an area in which the inner surface (149) of the first spar cap (141) and the inner surface (150) of the second spar cap (142) are covered by the adhesive joint (146).

3. Wind turbine rotor blade (110) according to any one of the preceding claims,
wherein an inner surface (149) of the first spar cap (141) and an inner surface (150) of the second spar cap (142) enclose an angle which is not larger than 20° in an area in which the inner surface (149) of the first spar cap (141) and the inner surface (150) of the second spar cap (142) are covered by the adhesive joint (146).

4. Wind turbine rotor blade (110) according to any one of the preceding claims,
wherein the suction side half shell (132) and the pressure side half shell (133) comprise a shell laminate (139) including a core material,
wherein the first spar cap (141) is arranged adjacent to the core material of the suction side half shell (132) and the second spar cap (142) is arranged adjacent to the core material of the pressure side half shell (133) in a chordwise direction.

5. Wind turbine rotor blade (110) according to claim 4, wherein an outer contour of the first spar cap (141) is matched to an outer contour of core material adjacent to the first spar cap (141),
and/or
wherein an outer contour of the second spar cap (142) is matched to an outer contour of core material adjacent to the second spar cap (142).

6. Wind turbine rotor blade (110) according to claim 4 or claim 5,
wherein an outer main shell layer (152) covers an outer surface (155) of the shell laminate (139) of the suction side half shell (132),
wherein the outer main shell layer (152) partly overlaps with an outer surface (155) of the first spar cap (141),
and/or
wherein an outer main shell layer (152) covers an outer surface (151) of the shell laminate (139) of the pressure side half shell (133),
wherein the outer main shell layer (152) partly overlaps with an outer surface (156) of the second spar cap (142).

7. Wind turbine rotor blade (110) according to claim 6, wherein an outer trailing edge shell layer (157) at least partly covers an outer surface (155) of the first spar cap (141), wherein the outer main shell layer (152) at least partly overlaps with the outer trailing edge shell layer (157),
and/or
wherein an outer trailing edge shell layer (157) at least partly covers an outer surface (156) of the second spar cap (142), wherein the outer main shell layer (152) at least partly overlaps with the outer trailing edge shell layer (157) .

8. Wind turbine rotor blade (110) according to any one of claims 4 to 7,
wherein an inner main shell layer (154) covers an inner surface (153) of the shell laminate (139) of the suction side half shell (132), wherein the inner main shell layer (154) partly overlaps with an inner surface (149) of the first spar cap (141),
and/or
wherein an inner main shell layer (154) covers an inner surface (153) of the shell laminate (139) of the pressure side half shell (133), wherein the inner main shell layer (154) partly overlaps with an inner surface (150) of the second spar cap (142).

9. Wind turbine rotor blade (110) according to claim 8, wherein an inner trailing edge shell layer (158) at least partly covers an inner surface (149) of the first spar cap (141), wherein the inner main shell layer (154) at least partly overlaps with the inner trailing edge shell layer (158),
and/or
wherein an inner trailing edge shell layer (158) at least partly covers an inner surface (150) of the second spar cap (142), wherein the inner main shell layer (154) at least partly overlaps with the inner trailing edge shell layer (158) .

10. Wind turbine rotor blade (110) according to any one of claims 4 to 8,
wherein the shell laminate (139) and the first spar cap (141) and/or the second spar cap (142) are fixed to each other by co-infusion lashing.

11. Wind turbine rotor blade (110) according to any one of the preceding claims,
wherein each of the first spar cap (141) and the second spar cap (142) comprises a stack (145) of fiber layers,
wherein each of the stacks (145) comprises at least one of a portion having a trapezoidal cross-sectional shape and a portion having a quadrangular cross-sectional shape.

12. Wind turbine rotor blade (110) according to any one of the preceding claims,
wherein the section of the wind turbine rotor blade (110) in which the trailing edge (135) of the wind turbine rotor blade (110) is formed by the first spar cap (141), the second spar cap (142) and the adhesive joint (146) extends over more than half of the length of the trailing edge (135) of the wind turbine rotor blade (110).

13. Wind turbine rotor blade (110) according to any one of the preceding claims,
wherein the rotor blade (110) comprises a first section (160) having a blunt trailing edge (135), a second section (162) having a sharp trailing edge (135) and a transition section (164) in which the blunt trailing edge (135) merges into the sharp trailing edge (135), wherein the trailing edge (135) in the second section (162) and in the transition section (164) is formed at least partly by the first spar cap (141), the second spar cap (142) and the adhesive joint (146).

14. Wind turbine rotor blade (110) according to any one of the preceding claims,
wherein in the section of the wind turbine rotor blade (110) in which the trailing edge (135) of the wind turbine rotor blade (110) is formed by the first spar cap (141), the second spar cap (142) and the adhesive joint (146), the trailing edge (135) of the first spar cap (141) and/or second spar cap (142) has a height decreasing over the length in a direction towards the rotor blade tip end (127).

15. Method for manufacturing a wind turbine rotor blade (110) for a wind turbine,
comprising the steps of:
- manufacturing a suction side half shell (132) comprising a first spar cap (141), wherein, at least in a section between a root end (126) and a tip end (127) of the suction side half shell (132), a trailing edge (135) of the suction side half shell (132) is formed by the first spar cap (141),
- manufacturing a pressure side half shell (133) comprising a second spar cap (142), wherein, at least in a section between a root end (126) and a tip end (127) of the pressure side half shell (133), a trailing edge (135) of the pressure side half shell (133) is formed by the second spar cap (142),
- connecting the suction side half shell (132) and the pressure side half shell (133) to each other by an adhesive joint (146) such that at least in a section between a root end and a tip end a trailing edge (135) of the wind turbine rotor blade (110) is formed by the first spar cap (141), the second spar cap (142) and the adhesive joint (146).
